# EUROPEAN PATENT APPLICATION

(11) **EP 1 930 216 A1**
(43) Date of publication of application: **11.06.2008**
(21) Application number: 06077193.8
(22) Date of filing: 07.12.2006
(51) Int. Cl.: B60R 16/02

(54) **Wire beam**

(71) Applicant: Nederlandse Organisatie voor toegepast-natuurwetenschappelijk Onderzoek TNO, 2628 VK Delft (NL)
(72) Inventor: De Zwart, Renatus Marius, 5655 JP Eindhoven (NL); Tacken, Roland Anthony, 5663 SH Geldrop (NL)
(74) Representative: van Loon, C.J.J.

(57) **Abstract**

Manufacturing a wire beam (1), comprising a support member (2) and a number of conductors (3). In order to incorporate the conductors on or in the support member the wire beam is manufactured by means of a so-called moulded interconnect device (MID) manufacture process. At least part of the conductors may be shaped, during the MID manufacturing process, as conductors which are conductively interconnected at their ends. The interconnected conductors then may be used as a common electrode during a electrodeposition process in which the conductors are galvanized electrically to provide them with an additional conductive layer. The interconnected ends are removed after completion of the electrodeposition process.

## Description

### Field of the invention

The invention concerns a wire beam configuration, e.g. to be used in a vehicle.

### Background of the invention

Wire beams in vehicles (cars, trucks, aeraoplanes etc.) often include a carrier or support body, on which or in which a plurality of isolated copper wires are mounted. Wire beams are rather large and laborious products. The assembly times are rather long. The reliability and serviceability of complex wire beams may be problematic in some cases.

### Summary of the invention

One aim of the present invention is to provide an improved wire beam (or wire tree) manufacture method, having a shorter processing time and resulting in a more reliable product. Another aim of the invention is to provide an improved and more reliable wire beam.

According to the invention the method for manufacturing a wire beam, comprising a support member and a number of conductors, preferrably comprises to incorporate or integrate the conductors on or in the support member by means of a so-called moulded interconnect device (MID) manufacture method.

Moreover, a wire beam according to the invention, comprising a support member and a number of conductors, preferably is a so-called moulded interconnect device (MID) the conductors of which being incorporated at, on or in of the support member.

Moulded Interconnect devices (MIDs) can be defined as an injection moulded thermoplastic substrate which incorporates a conductive circuit pattern, and integrates mechanical and electrical functions. They are usually three dimensional and a variety of techniques may be used to apply the conductors and components. The technology has made significant advances in recent years, particularly the development of high-temperature resins and using rapid prototyping techniques to generate pre-production examples, but requirements for multilayers, high component densities and plated-through holes will continue to be met by conventional planar printed circuit board technology. A review can be found at http://www.primefaraday.org.uk/technology-watch/technology-reviews/moulded-interconnect-devices.pdf

By using MID techniques, the intented conducting tracks are preprocessed (e.g. by laser surface treating) and subsequently (electroless) metallized. The conductive tracks applied to the synthetic carrier (support member) have a flat shape. No assembly is needed anymore. Until now MID is mainly used for small products and for low power applications. Using MID technology for large products and/or high power applications in e.g. automotive, aviation etc. is not known from the prior art.

The electric current which might be conducted by MID tracks is presumed to be rather restricted. However, experiments, done by applicant, indicate that the limits are much higher than generally presumed until now.

Advantages of using MID based wire beams included reduction of the assembly time, reliability, weight reduction, cost reduction and space reduction. Application areas include all areas in which wiring beams (trees) are used in combination with high(er) power, e.g. automotive, aviation, aerospace.

### Exemplary Embodiment

Figure 1 shows a view of an example of a wire beam made by the method according to the invention;
Figure 2 shows a cross-sectional view of an exemplary wire beam.

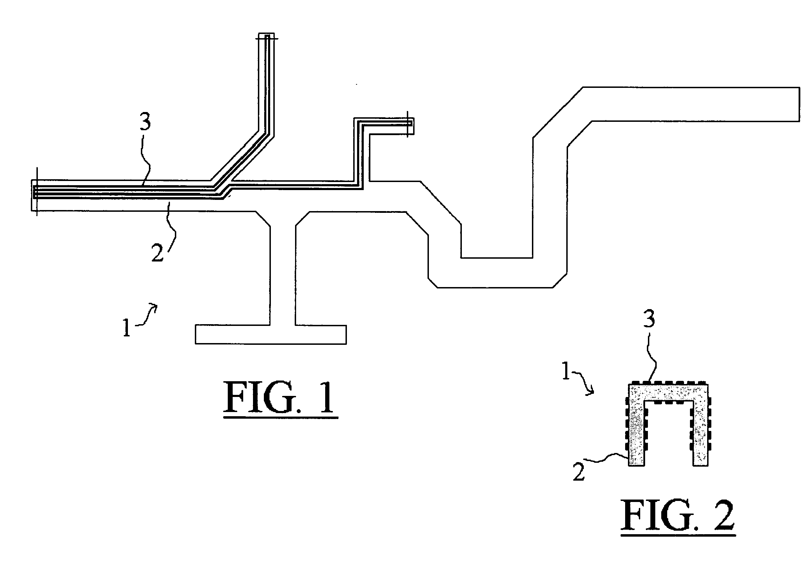

The wire beam 1 shown in figure 1, comprises a support member 2 and a number of conductors 3. The wire beam has the shape of a moulded interconnect device (MID): the conductors 3 are incorporated at the outer or inner (see figure 2) surface of the support member 2.

The wire beam 1 is made by the moulded interconnect device (MID) manufacture method which is known as such, so it may be redundant to discuss several MID techniques. However, for the sake of completeness, below some items of the MID process will be reviewed, referencing to
http://www.primefaraday.org.uk/technology-watch/technology-reviews/moulded-interconnect-devices.pdf.

Essentially, MIDs can be produced in a variety of ways to suit the application at hand. Established methods of manufacture include Single-shot injection moulding, Two-shot moulding and Film Techniques.

In the case of single-shot injection moulding, the moulding process is followed by a series of metallizing steps that are very similar to those employed for conventional printed circuitry. One of the key techniques utilised in the manufacture of MIDs with fine circuit traces is photoimaging. To describe this process in simple terms, the MID substrate is chemically treated to promote adhesion between the plastic and metal that will be plated on it. Typically, a thin layer of electroless copper is deposited onto the substrate's surface to make it conductive, followed by the application of an electrophoretic resist resin. Exposure to ultraviolet light through a photomask - a film that carries the artwork of the required circuit traces - causes the resin to harden where the circuit pattern is required; the unhardened resin is then removed, revealing the underlying electroless copper which is then stripped off via chemical means. In the next stage the hardened resist is also chemically removed to reveal the circuit traces underneath. This leaves the plastic moulding with only the desired circuit pattern.

The typical process stages for single-shot injection moulding of MIDs are:
- Injection mould the substrate: The part is injection moulded in a platable grade of thermoplastic.
- Electroless plate: The surface is chemically prepared to accept electroless plating and a thin layer of electroless copper is deposited on the entire surface.
- Coat resist: A photosensitive polymer resist is applied over the entire part including through-holes (if any) and three-dimensional features.
- Expose to UV and develop: The moulding is exposed to UV light through a conforming phototool such that the resist hardens. The unexposed resist is then chemically removed in the developing stage.
- Electroplate metals: Copper and metals such as tin/lead or nickel/gold are deposited.
- Strip resist and etch background copper: The resist is removed from unplated areas and the background copper is etched.

There is a variation of this process which utilises fully additive plating techniques. In this case the entire plastic substrate is copper plated to a specified final thickness before resist is applied. The photomask is designed so that this resist is exposed and hardened only where the circuit tracks are required. After unhardened resist is chemically removed, the entire thickness of copper which has been uncovered is removed, again leaving the plastic substrate with only the desired circuit pattern. However, the copper tracks are still covered with hardened resist, which is then chemically removed so that the circuitry can be finished as required.

Two-Shot Moulding uses two separate moulding cycles and usually different polymers to form the component. It requires the construction of different mould cavities for each shot. Catalysed resin versions of this process use a polymer that contains a small quantity of plating catalyst. The part is designed so that imaging is undertaken during moulding by leaving this catalysed resin exposed on the surface of the final part only where the circuit traces are required. This is accomplished by creating two moulds. The first shot is moulded and then inserted into the second mould in which the second resin system forms the final three-dimensional features of the component. Depending on part design, either the first or second shot resin may be the one containing a plating catalyst. Chemical treatment is undertaken to promote adhesion between the plastic and the metal plated onto it so that when the moulding is put through an electroless copper plating cycle, only resin containing the catalyst plates and thus creates the circuit pattern. Other electroless metal overlays can be applied if desired, and it is not unusual to employ rotary moulds or robotic handling for two-shot moulding processes.
The process stages therefore are:
- Injection mould first shot: A first shot, which usually contains non-catalysed resin, is injection moulded in one cavity in a mould. This produces a first-stage moulding having identifiable areas for placement or incorporation of further moulding material for additional processing.
- Injection mould second shot: The first-stage moulding is inserted into a second cavity where a second shot, generally of platable catalysed resin, is introduced into the mould. This typically produces a moulding with exposed, platable, catalysed resin on its surface, the patterns of which define the required circuit tracks.
- Promote adhesion: As part of the plating process, the moulding undergoes a chemical treatment to enhance the ability of catalysed resin to accept plating.
- Plate the part: The moulding is copper plated to a specified thickness. Metallic or organic finishes may then be applied.

A variation of this technique is to use resins which do not contain a plating catalyst. In this case the first shot is moulded and chemically treated with a catalyst before moulding the second shot. Copper plating is then undertaken and only the resin that has been chemically treated plates to form circuits.

So, two-shot moulding can enable very complex three-dimensional circuitry to be produced, limited only by an ability to mould the component since there are no additional imaging steps involved. Plated-through holes can be accommodated, but because circuit design changes usually require mould modifications it is more difficult and expensive to incorporate changes on parts within this process. Line and width spacing is limited by the moulding process, and it is generally difficult to achieve spacings as low as other PCB techniques; a typical value is 0.25mm. It is the least labour-intensive process and generally the easiest to automate for high-volume production. However, tooling costs are high, which means that it is more suited to high-volume production requirements, typically associated with the telecommunications and automotive industries.

Film techniques have in common the fact that the conducting material starts out as a separate flexible film and is subsequently attached to an injection-moulded plastic substrate. The conductors are usually formed from copper laminate, foil or silver conductive inks on a carrier. Typical film processes are the Capture Process, the Transfer Process and Hot Stamping.

The capture process utilises preformed circuits on a flexible carrier, which are inserted into an injection mould. The circuits are formed either by printing conductive inks, or by etching copper-clad films. Circuits on a flexible carrier are die-cut to shape and can be thermoformed into three dimensions before insertion into the mould. Polymeric resin is injected behind the carrier, thus forcing it against the outer surfaces of the mould when the cycle is complete, the carrier with circuit becomes an integral part of a rigid injection moulded item; plating may be used to increase circuit thickness or provide a different metal topcoat, and circuits on the carrier can be single or double-sided (connected by vias in the carrier).

The transfer process is a variation of the capture process in that the flexible film is peeled away rather than remaining with the moulded part. In this case, the top of the circuits are flush with the moulded surface which can have benefits for applications requiring sliding contacts.

Hot stamping is another technique that utilises flexible copper foil coated with an adhesive. A special embossing die is built incorporating a heated block. The substrate is injection moulded prior to applying the circuit. Foil is pressed onto the polymer surface using this heated die and is simultaneously cut into the shape of the embossing die, thus forming a circuit. It is a relatively simple technique but the plastic surface where the circuit is to be embossed must be comparatively flat or have a smooth, uniform contour so that the embossing die can precisely contact the surface. In general, these film processes are more easily applied to relatively flat surfaces but are capable of providing moderately complex three-dimensional circuits using special techniques. Since the circuitry is on a separate carrier it is easy to modify circuit design provided this does not necessitate mould modifications. Track line and width spacing in the region of 0.025mm is no real problem, but is it difficult to provide plated through holes.

MID processes like 2-component injection moulding, hot stamping etc., reviewed in the preceding, are already used to manufacture 3D-MIDs. At present the predominantly used processes are two-shot injection moulding, hot embossing, insert moulding and laser structuring (additive and subtractive). The associated high initial manufacturing costs, however, considerably limit the efficiency of these methods for small production runs and design modifications. Prototyping shortly before series production is almost impossible. Moreover, increasing miniaturisation of the circuits on MID components leads to a considerable rise in tooling-up time and expense. A rather novel process, introduced by LPKF (www.lpkf.com), the socalled MID-LDS method (LDS standing for Laser Direct Structuring) is a flexible and economic alternative. According to the LDS process the three-dimensional circuit carrier is injection moulded from a modified polymer material. The modification allows laser activation of circuit tracks on the surface of the circuit carrier. The activated areas become metalized in a chemical metalisation bath in order to build conductive tracks. Advantages of the LDS method are:
- More flexibility because the laser directly transfers the artwork from the computer to the injection-moulded component, so no additional tools or masks are required. Structuring takes place solely on the basis of the existing CAD data.
- Tooling costs significantly reduced because laser-structurable MIDs can be made using 1-component injection moulding.
- Lasers are ideal for the production of ultra-fine structures.
- High cost efficiency for fine structures and small to medium production runs in particular.
- Highly pro-environment because no caustic or etching chemicals are used.

According to a preferred and more elaborated embodiment of the invention a number of tracks may - in first instance - be short-circuited at the ends of the wire beams, facilitating to include all or a plurality of conductive tracks together in an electrical circuit which is used to perform electrodeposition (process for applying a galvanic layer using electric current) upon the tracks, viz. to provide them with an additional conductive layer which is thick and robust enough to conduct large currents which may be used in the relevant, e.g. automotive, applications. Those short-circuited ends of the conductive tracks may be cut or punched off after the electrodeposition process has been completed.

To protect the conductive tracks (e.g. to be used in trucks etc.) against corrosion etc., the conductive tracks may be covered by a protective layer, e.g. made of a polymer or an anti-corrosive conductor.

## Claims

1. Method for manufacturing a wire beam (1), comprising a support member (2) and a number of conductors (3), the method comprising to incorporate the conductors at, on or in the support member by means of a so-called moulded interconnect device (MID) manufacturing process.

2. Method according to claim 1, at least part of the conductors being shaped, during the MID manufacturing process, as conductors which are conductively interconnected at their ends, the interconnected conductors being used as a common electrode during a consecutive electrodeposition process in which the conductors are galvanized electrically to provide them with an additional conductive layer; the interconnected ends being removed after completion of the electrodeposition process.

3. Wire beam (1), comprising a support member (2) and a number of conductors (3), the wire beam being a so-called moulded interconnect device (MID) the conductors of which being incorporated at, on or in of the support member.

4. Wire beam according to claim 3, at least part of the conductors comprising an additional conductive layer.

5. Wire beam according to claim 3 or 4, at least part of the conductors comprising an anti-corrosive layer.
